# EUROPEAN PATENT APPLICATION

(11) **EP 2 423 558 A1**
(43) Date of publication of application: **29.02.2012**
(21) Application number: 11174914.9
(22) Date of filing: 21.07.2011
(51) Int. Cl.: F16L 55/136, B22D 17/22, B29C 45/73

(54) **Sealing element for ends of ducts in mould cooling circuits, sealing kit for ducts of mould cooling circuits and relative mould**

(30) Priority: 31.08.2010 IT BS20100146
(71) Applicant: Balzi, Ermanno, 25080 Mazzano (IT)
(72) Inventor: Balzi, Ermanno, 25080 Mazzano (IT)
(74) Representative: Mitola, Marco

(57) **Abstract**

Sealing element (4) for ends (8) of ducts (12) in mould cooling circuits (16), comprising a sealing screw (24) having a head (28) and a stem (32) facing, in an axial direction (X-X) towards the exit of the end(8), a washer (36) joined coaxially to said stem (32), so as to constrain, between the washer (36) and the head (28), a sealing ring (40) coaxial with the stem (32), a ring-nut (48) joined coaxially to the stem (32), on the side opposite the head (28), so as to constrain, between the ring-nut (48) and the washer (36), a blocking ring (52) of the sealing element (4). The ring-nut (48) rotates in relation to the sealing screw (24) so as to screw itself at least partially onto the stem (32) around the axial direction (X-X), axially compressing the sealing ring (40) and the blocking ring (52) so that these can expand in a radial direction (Y-Y). In the expanded radial configuration the sealing ring (40) ensures the hermetic seal and the blocking ring (52) prevents the sealing element (4) from coming off the end (8) of the mould (16),

## Description

The present invention relates to a sealing element, in particular for ends of ducts in mould cooling circuits, as well as a sealing kit for ducts of mould cooling circuits and a relative mould.

In particular, it is known of in the art to make moulds provided with cooling circuits so as to achieve control of the temperature inside the moulds.

The cooling ducts are obtained by means of perforations made starting from the outer surface of the mould so as to obtain the required distribution of the channels depending on the applications of the mould.

The perforations are normally made by means of rectilinear ducts which come out in open ends on the outer surface of the mould.

Said open ends must therefore be sealed to permit the circulation of the cooling liquid.

The solutions of the prior art provide for threadings on the inner wall of the ducts, at said ends, so as to apply dedicated screw caps, provided with sealing gaskets, such as bands in polymer material applied to the threadings, suitable to ensure hermetic sealing.

The solutions of the prior art present numerous drawbacks.

For example, a threading needs to be made on the ends of the ducts: this machining is relatively complex and expensive to perform.

Moreover, a cap with threading is not always able to achieve a perfectly hermetic seal. In particular, the bands applied to the caps may deteriorate even during screwing of the cap itself and do not always ensure a lasting seal. Moreover, in the case of removal of the cap, the bands must always be replaced with new sealing elements.

Moreover, the caps are usually removed and replaced after each use of the mould.

The unscrewing and screwing of the many caps present on a mould is a slow operation and adds to machine downtime.

The purpose of the present invention is to make a sealing element which overcomes the drawbacks mentioned in relation to the prior art.

Such drawbacks and limitations are resolved by a sealing element according to claim 1, by a kit according to claim 10, and by a mould according to claim 12.

Other embodiments of the sealing element according to the invention are described in the subsequent claims.

Further characteristics and advantages of the present invention will be clearly comprehensible from the description given below of its preferred embodiments, made by way of a non-limiting example, wherein:

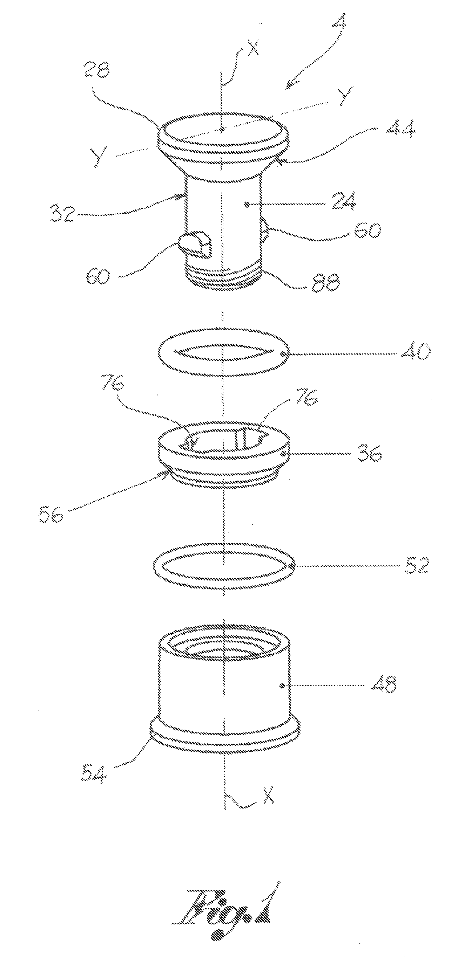

figure 1 shows a perspective view, in separate parts, of a sealing element according to one embodiment of the present invention;

figure 2 shows a cross-section view, in an assembled configuration, of the sealing element in figure 1, in a first insertion step in an associable mould;

figure 3 shows a cross-section view, in an assembled configuration, of the sealing element in figure 1, in a second blocking step in an associable mould;

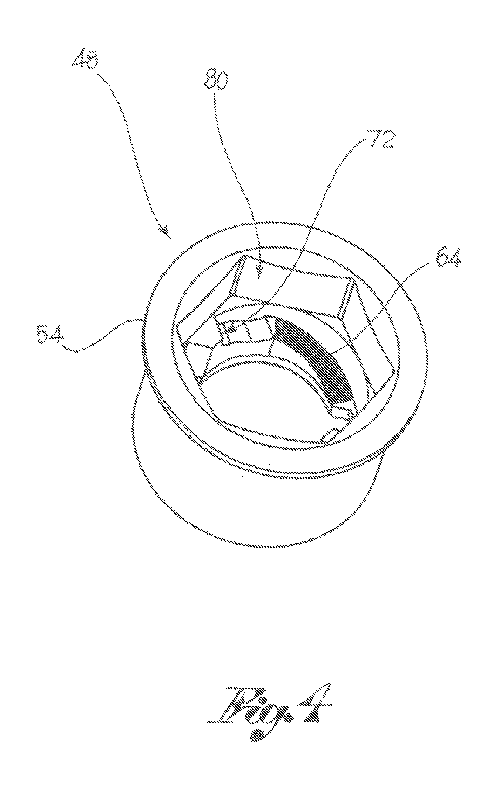

figure 4 shows a perspective view of the detail IV in figure 1;

figures 5 and 6 show perspective views, in separate parts, of sealing and cooling elements according to further embodiments of the present invention.

The elements or parts of elements common to the embodiments described below will be indicated using the same reference numerals.

With reference to the aforementioned drawings, reference numeral 4 globally denotes a sealing element for ends 8 of ducts 12 in mould cooling circuits 16, suitable to hermetically seal said ends 8.

The mould cooling circuits 16 comprise channels which receive cooling fluid and which open into the outer surfaces of the moulds 16 at the ends 8. Said ends 8 comprise at least one annular groove 20 suitable for permitting the blocking of the sealing element 4 in the end 8, as described further below.

The sealing element 4 comprises a sealing screw 24 which can be inserted in said ends 8, the sealing screw 24 having a head 28, positioned towards the inside of the ends 8, and a stem 32 facing, in an axial direction X-X towards the exit of the end 8.

Preferably, the head 28 of the sealing screw 24 can be inserted with play inside the end 8, and is counter-shaped to said end 8.

The sealing element 4 comprises a washer 36 joined coaxially to the stem 32, so as to constrain a sealing ring 40 positioned coaxially with the stem 32, between the washer 36 and the head 28. In other words, the sealing ring 40 is axially constrained between the head 28 and the washer 36.

The washer 36 can be inserted with play inside the end 8. The sealing ring 40 is inserted between the washer 36 and the head 28 to form a hermetic seal against the fluid so as to prevent its exit from the end 8.

The sealing ring 40 is for example an O-ring, preferably in polymer material. The sealing ring 40 is elastic so as to be able to dilate radially. A radial direction Y-Y is understood to mean a direction perpendicular and incident to said axial direction X-X.

The head 28 of the sealing screw 24, on the side of the washer 36, has a first conical portion 44 suitable for facilitating the radial expansion of the sealing ring 40 under the axial thrust exerted by the washer 36.

The sealing element 4 further comprises a ring-nut 48 joined coaxially to said stem 32 on the side opposite the head 28, so as to constrain a blocking ring 52 of the sealing element 4, positioned coaxially with the stem 32, between the ring-nut 48 and the washer 36.

The ring-nut 48 has, on the side opposite the associable sealing screw 24, a collar 54 suitable for stopping the insertion of the ring-nut 48 inside the end 8 of the mould cooling circuit 16. The collar 54 can be housed in an associable flare 55 made on the end 8 of the mould 16.

The blocking ring 52 acts so as to axially constrain the sealing element 4 to the end 8. In the rest configuration, the blocking ring 52 has a diameter such as to pass through the end 8 so as to permit the insertion of the sealing element in the end 8.

In the configuration of radial expansion, the blocking ring 52 has a greater diameter than the diameter of the end 8 so as to insert itself in the annular groove 20 of the end 8.

In other words, the annular groove 20 of the end 8 is suitable to house the blocking ring 52 of the sealing element in the configuration of radial expansion, so as to axially block the sealing element 4 in the end 8, preventing it from coming off in particular.

The blocking ring 52 is for example in metal material and is elastic so as to be able to dilate radially. Preferably, the blocking ring 52 has a notch so as to facilitate its radial expansion.

Preferably, the washer 36, on the side facing the associable ring-nut 48, comprises a second conical portion 56 suitable for facilitating the radial expansion of the blocking ring 52 under the axial thrust exerted by the ring-nut 48.

Advantageously, the ring-nut 48 rotates around the axial direction X-X in relation to the sealing screw 24 so as to screw itself at least partially onto the stem 32 of the sealing screw 24, axially compressing the sealing ring 40 and the blocking ring 52 so that these can expand radially. This way, in the expanded radial configuration the sealing ring 40 ensures the hermetic seal of the cooling fluid introduced in the cooling circuit and the blocking ring 52 prevents the sealing element 4 from coming off the end 8 of the mould 16.

According to one embodiment, the stem 32 comprises a pair of radial teeth 60 which couple with corresponding inclined planes 64 positioned on an internal lateral wall 68 of the ring-nut 48 so as to ensure a rotor-translatory coupling of the ring-nut 48 and the sealing screw 24. In other words, the radial teeth 60 couple by roto-translation with the inclined planes 64 so as to axially pack compress the sealing screw 24, the washer 36 and the ring-nut 48, as well as the sealing 40 and blocking 52 rings between them.

Preferably, the radial teeth 60 and the inclined planes 64 are positioned diametrically opposite each other and the inclined planes 64 have at least one limit stop rabbet 72 for the rotation of the ring-nut 48 in relation to the stem 32.

The washer 36 comprises seats 76 counter-shaped to the radial teeth 60, said seats 76 housing the radial teeth 60 so as to constrain the washer 36 to the stem 32 in rotation in an axial direction X-X, permitting a relative axial translation between the washer 36 and the stem 32.

The ring-nut 48, on the side opposite the associable sealing screw 24, has a first shaped hole 80 suitable for permitting the insertion of a tool 100 so as to join the tool 100 to the ring-nut 48 in rotation.

For example, the first shaped hole 80 has a hexagonal cross-section; such cross-section may obviously be different on condition that it ensures the rotation of the ring-nut by the tool 100.

According to one embodiment, the stem 32 of the sealing screw 24, has a second shaped hole 84 suitable for permitting the insertion of the tool 100 so as to join the tool 100 to the sealing screw 24 in rotation.

The second shaped hole 84 may also have a hexagonal cross-section for example.

Moreover, the stem 32 of the screw 24, has an outer threading 88 suitable for permitting the engagement of the stem 32 to facilitate the subsequent extraction of the sealing element 4 from the end (8) of the mould 16.

The tool 100 may be an assembly spanner comprising a first and a second tip 104,108 separate and coaxial to each other, counter-shaped to the first and a second shaped hole 80,84 of the ring-nut 48 and of the stem 32 of the sealing screw 24 respectively.

Said tips104, 108 being reciprocally rotatable so as to permit the relative rotation of the ring-nut 48 in relation to the sealing screw 24.

For example, the tool 100 comprises a handle 112 joined in rotation with the second tip 108, associable with the second shaped hole 84 of the stem 32 and a grip 116, coaxial and rotating in relation to the second tip 108, as well as joined to the first tip 104 associable with the first shaped hole 80 of the ring-nut 48.

Consequently, it is possible to grasp the grip 116 with one hand, so as to block the ring-nut 48 in rotation and turn the handle 112 with the other hand so as to rotate the sealing screw 24 engaging the radial teeth 60 with the inclined planes 64.

According to one embodiment, the tool 100 or assembly spanner comprises an extraction tip 120 suitable to be screwed onto a corresponding outer threading 88 of the stem 32 of the sealing screw 24 so as to permit the coupling of the stem 32 of the sealing screw 24 and the subsequent extraction of the sealing element 4 from the end 8 of the mould 16.

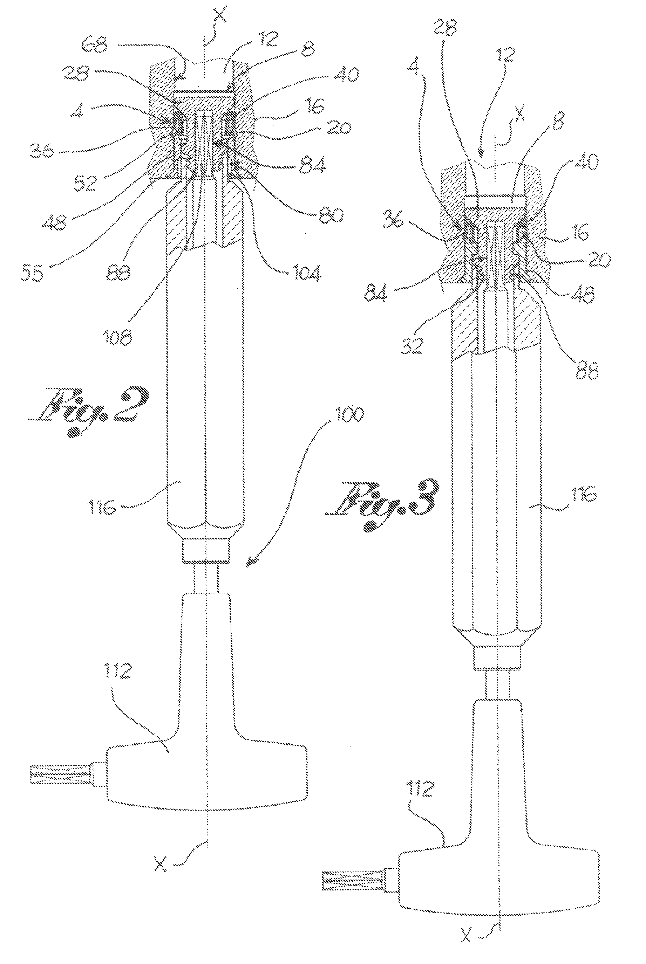

The step of fitting the sealing element 4 in the relative end 8 is shown in figures 2 and 3. In particular to begin with, the sealing element is inserted in the end 8, until the collar 54 abuts with the flare 55 made on the mouth of the end 8. The tool is then engaged with the sealing element: in particular the first tip 104 is engaged in the first shaped hole 80 of the ring-nut 48 and the second tip 108 engaged in the second shaped hole 84 of the stem 32 (figure 2).

In the rest configuration, that is to say not radially expanded, both the sealing ring 40 and the blocking ring 52 are idle, kept axially in position by the head 28, by the washer 36 and by the ring-nut 48. The tool is then rotated so as to engage the radial teeth 60 on the respective inclined planes 64; the effect of the inclined planes is to axially pack compress the ring-nut 48 towards the washer 36 and towards the head 28 (figure 3).

The contemporary compression and rotation is enabled by the shape of the washer 36: in fact the seats 76 of the washer 36 permit an axial translation of the washer 36 in relation to the stem 32, but prevent rotation of the same in relation to each other.

The effect of the axial compression on the sealing 40 and blocking 52 rings consists of a radial deformation or expansion. In particular the sealing ring 40 widens under the thrust of the first conical portion 44 of the head 28, so as to acquire a substantially triangular cross-section, counter-shaped to the interstice between the first conical portion 44 of the head 28, the internal lateral wall 68 of the end 8 and the ring-nut 48. In such deformed configuration the sealing ring 40 ensures a hermetic seal of the cooling fluid.

The blocking ring 52 expands radially, preferably thanks to the relative notch, under the thrust exerted by the second conical portion 56. In the expanded radial configuration the blocking ring 52 occupies the annular groove 20 made on the internal lateral wall 68 of the end 8.

A cooling device suitable for optimising the functioning of a cooling circuit may be joined to the sealing element.

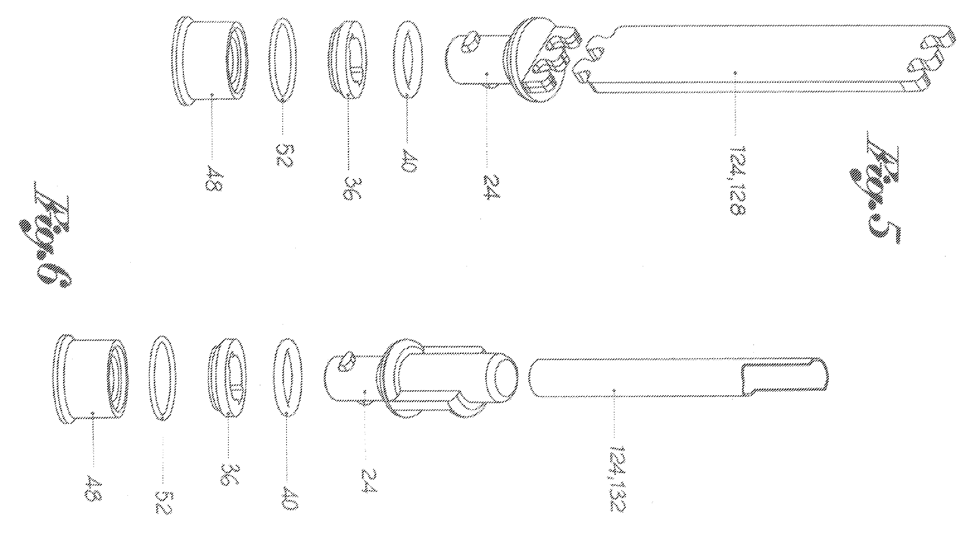

For example, at least one cooling device 124 which may be, for example, a cooler blade 128 (figure 5) or a cooler fountain 132 (figure 6) may be joined to the head 28 of the sealing screw 24 on the side opposite the stem 32.

Such cooler devices 124, 128, 132 are known of in the art and function by dividing the flow of cooling fluid inside the duct, essentially with the aim of creating a vortex or mixing the cooling fluid inside the ducts so as to increase the heat exchange.

As may be appreciated from the description, the sealing element according to the invention makes it possible to overcome the drawbacks of the prior art presented.

In particular, the sealing element of the present invention does not require any threading to be made on the cooling ducts of the mould for assembly to the mould.

The only mechanical machining required consists of making the groove which proves extremely fast, accurate and cheap to do.

Furthermore, the sealing element of the present invention provides ample guarantee of hermetic sealing.

In fact the sealing and attachment means are mechanically separate from each other: in other words the elastic ring forms the mechanical block inside the groove of the mould, while the gasket acts as the hermetic seal.

The sealing element may therefore be fitted and removed rapidly and reutilised various times.

The fitting and removal operation of the sealing element is extremely rapid because it does not entail fully screwing but merely rotating the sealing element by an angle of about 180 degrees.

A person skilled in the art may make numerous modifications and variations to the sealing elements described above so as to satisfy contingent and specific requirements, all contained within the sphere of the invention as defined by the appended claims.

## Claims

1. Sealing element (4) for ends (8) of ducts (12) in mould cooling circuits (16), suitable for achieving hermetic sealing of said ends (8), comprising
- a sealing screw (24) which can be inserted in said ends (8), the sealing screw (24) having a head (28), positioned towards the inside of the ends (8), and a stem (32) facing, in an axial direction (X-X) towards the exit of the end(8),
- a washer (36) joined coaxially to said stem (32), so as to constrain, between the washer (36) and the head (28), a sealing ring (40) coaxial with the stem (32),
- a ring-nut (48) joined coaxially to said stem (32), on the side opposite the head (28), so as to constrain, between the ring-nut (48) and the washer (36), a blocking ring (52) of the sealing element (4), positioned coaxially to the stem (32),
wherein
- the ring-nut (48) rotates in relation to the sealing screw (24) so as to screw itself at least partially onto the stem (32) of the sealing screw (24) around the axial direction (X-X), axially compressing the sealing ring (40) and the blocking ring (52) so that these can expand in a radial direction (Y-Y), perpendicular and incident to the axial direction (X-X), wherein in the radial configuration the sealing ring (40) ensures the hermetic seal and the blocking ring (52) prevents the sealing element (4) from coming off the end (8) of the mould (16),
Wherein the stem (32) comprises a pair of radial teeth (60) which couple with corresponding inclined planes (64) positioned on an internal lateral wall (68) of the ring-nut (48) so as to ensure a rotor-translatory coupling of the ring-nut (48) and the sealing screw (24).

2. Sealing element (4) according to claim 1, wherein the radial teeth (60) and the inclined planes (64) are positioned diametrically opposite to each other and the inclined planes (64) have at least one limit stop rabbet for the rotation of the ring-nut (48) in relation to the stem (32).

3. Sealing element (4) according to claim 1 or 2, wherein the washer (36) comprises seats (76) counter-shaped to the radial teeth (60), said seats (76) housing the radial teeth (60) so as to allow the axial passage of the radial teeth (60) through said seats (76), during the assembly of the washer (36) to the stem (32).

4. Sealing element (4) according to any of the previous claims, wherein the head (28) of the sealing screw (24), on the side of the washer (36), has a first conical portion (44) suitable for facilitating the radial expansion of the sealing ring (40) under the axial thrust exerted by the washer (36).

5. Sealing element (4) according to any of the previous claims, wherein the washer (36), on the side facing the associable ring-nut (48), comprises a second conical portion (56) suitable for facilitating the radial expansion of the blocking ring (52) under the axial thrust exerted by the ring-nut (48).

6. Sealing element (4) according to any of the previous claims, wherein the ring-nut (48) has, on the side opposite the associable sealing screw (24) a collar (54) suitable for stopping the insertion of the ring-nut (48) inside the end (8) of the cooling circuit of the mould (16).

7. Sealing element (4) according to any of the previous claims, wherein the ring-nut (48), on the side opposite the associable sealing screw (24), has a first shaped hole (80) suitable for permitting the insertion of a tool (100) so as to join the tool (100) to the ring-nut (48) in rotation.

8. Sealing element (4) according to any of the previous claims, wherein the stem (32) of the sealing screw (24), has a second shaped hole (84) suitable for permitting the insertion of a tool (100) so as to join the tool (100) to the sealing screw (24) in rotation.

9. Sealing element (4) according to any of the previous claims, wherein the stem (32) of the sealing screw (24), has an outer threading (88) suitable for permitting the engagement of the stem (32) and the subsequent extraction of the sealing element (4) from the end of the mould (16).

10. Closure kit for ends (8) of ducts (12) in mould cooling circuits (16), comprising at least one sealing element (4) according to any of the claims from 1 to 9, and at least one assembly spanner (100) comprising a first and a second tip (104, 108), separate and coaxial to each other, counter-shaped to a first and second shaped hole (80, 84) of the ring-nut (48) and of the stem (32) respectively, said tips (104, 108) being reciprocally rotatable so as to allow the relative rotation of the ring-nut (48) in relation to the sealing screw (24).

11. Mould (16) comprising a cooling circuit having at least one cooling duct (12) which comes out in at least one end (8) provided with at least one annular groove (20), and comprising at least one sealing element (4) according to any of the claims from 1 to 9, the annular groove (20) being suitable for housing the blocking ring (52) of the sealing element (4) in a configuration of radial expansion.
